# EUROPÄISCHE PATENTSCHRIFT

(11) **EP 1 051 874 B1**
(45) Veröffentlichungstag und Bekanntmachung des Hinweises auf die Patenterteilung: **14.06.2006**
(21) Anmeldenummer: 99908754.7
(22) Anmeldetag: 29.01.1999
(51) Int. Cl.: H04Q 7/38

(54) **VERFAHREN ZUM AUSTAUSCH VON NACHRICHTEN IN EINEM MOBILKOMMUNIKATIONSSYSTEM**
METHOD FOR EXCHANGING MESSAGES IN A MOBILE COMMUNICATIONS NETWORK
PROCEDE D'ECHANGE DE MESSAGES DANS UN SYSTEME DE COMMUNICATION MOBILE

(30) Priorität: 30.01.1998 DE 19803450
(43) Veröffentlichungstag der Anmeldung: 15.11.2000
(73) Patentinhaber: T-Mobile Deutschland GmbH, 53227 Bonn (DE)
(72) Erfinder: JAENSCH, Bernd, D-53639 Königswinter (DE); MEIERL, Reimund, D-53229 Bonn (DE); SCHILLBACH, Ralf, D-50999 Köln (DE); STRAUCH, Frank, D-50679 Köln (DE)
(74) Vertreter: Riebling, Peter
(86) Internationale Anmeldenummer: PCT/DE1999/000234
(87) Internationale Veröffentlichungsnummer: WO 1999/039533

(56) Entgegenhaltungen:
- EP-A- 0 781 064
- WO-A-95/25407
- WO-A-97/28661

## Beschreibung

Die Erfindung betrifft ein Verfahren zum Austausch von Nachrichten in einem Mobilkommunikationssystem mit Endgerätesystemen, wobei im Mobilkommunikationssystem mehrere alternative Kommunikationsarten für den Austausch von Nachrichten zur Verfügung stehen, und das Endgerätesystem unter Zugriff auf endgeräteseitig gespeicherte Daten einen Nachrichtenaustausch durchführt.

Eine anwenderfreundliche Nutzung von mobilen Nachrichtendiensten wie Fax, Daten, Kurznachrichten (SMS), E-Mail etc. wird derzeit noch durch die komplizierte Benutzungsweise der Dienste behindert. Bislang vorhandene Verfahren verlangen vom Nutzer in der Regel ein tiefergehendes Verständnis für die einzelnen von ihm benutzten Dienste.

Die WO-A-97/28661 offenbart ein Verfahren zur automatischen Selektion eines Datendienstes in einem digitalen Mobiltelekommunikationssystem, wobei die zu übertragenden Daten vom Endgerät auf eine Befehlssequenz hin überwacht werden und je nach Inhalt der Befehlssequenz vom Endgerät entweder eine paketweise Datenübertragung oder eine asynchrone Datenübertragung durchgeführt wird.

Aus der EP-A-0 781 064 ist ein mobiles Endgerät bekannt, das in mehreren Kommunikationsnetzen betrieben werden kann. Hierzu enthält das Endgerät eine Liste von verfügbaren Kommunikationsnetzen und wählt, vorzugsweise in Abhängigkeit von einer benutzerdefinierten Prioritätenvorgabe, ein geeignetes Kommunikationsnetz aus.

Beide bekannten Verfahren beziehen sich nicht auf eine automatische Auswahl einer Vielzahl von verschiedenen Kommunikationsarten, wie z.B. Telefon, Fax, SMS, Funkruf, Internet usw., sondern auf eine spezifische Auswahl zwischen synchroner oder asynchroner Datenübertragung bzw. eine Auswahl eines verfügbaren Kommunikationsnetzes. Eine Auswahl der Übertragungsart anhand von empfängerspezifischen Vorgaben und/oder unter Verwendung der kostengünstigsten und/oder schnellsten Übertragungsart ist nicht vorgesehen.

Es ist die Aufgabe der vorliegenden Erfindung, hier Abhilfe zu schaffen und ein unkompliziertes Verfahren zum Austausch von Nachrichten bereitzustellen, das auch einem ungeübten Benutzer ohne Kenntnisse der spezifischen Mobilfunkdienste die einfache Nutzung dieser Dienste ermöglicht.

Diese Aufgabe wird gelöst durch die Merkmale des Anspruchs 1.

Grundsätzlich ist das Verfahren für den Einsatz in einem Mobilkommunikationssystem vorgesehen. Dabei ist unter Mobilkommunikationssystem ein Kommunikationssystem zu verstehen, das verschiedenste Kommunikationsarten wie Sprache, Fax, Daten, Kurznachrichten (SMS), Funkruf, E-Mail etc. bietet, wobei zumindest zum Teil die Übertragung von Nachrichten drahtlos erfolgt. Es kann jedoch auch eine Anwendung des Verfahrens in einem Festnetzsystem vorgesehen werden.

Der Aufbau der Kommunikationsverbindungen kann endgeräteseitig über ein Mobilfunkmodem erfolgen, das an ein Rechnersystem angeschlossen werden kann, z.B. an ein tragbares Laptop. Es wird dabei bevorzugt eine Registrierung der Endgerätekomponente durch entsprechende Einrichtungen des Mobilkommunikationssystems vorgesehen. Dies kann durch Übersendung von Nachrichten an die Registrierungseinrichtung erfolgen, z.B. durch eine Kurznachricht (SMS). Die Registrierung kann durch direkte Anwahl der Registrierungseinrichtung erfolgen, wobei die Anwahlnummer endgeräteseitig fest gespeichert sein kann. Bei der Registrierung können Benutzerdaten übermittelt werden, die dazu verwendet werden können, netzseitig dem Benutzer bestimmte Dienste individuell bereitzustellen.

Alle beim Endgerät eingehenden Daten, die Nachrichten enthalten, werden endgeräteseitig oder idealerweise bereits Seitens des Mobilkommunikationssystems mit allen oder nur einer Auswahl der folgenden Zusatzdaten, z.B. durch Setzen entsprechender Parameter in vorgesehenen Statusfeldern, versehen:
- **aktueller Nachrichtenstatus** z.B. Neu oder Bereits gelesen
- **Datum** und **Uhrzeit**
- **Dienst:** Hinweis auf den Dienst, über den die Nachricht empfangen wurde (Fax, E-Mail, SMS, Funkruf, T-Online, Internet WWW etc.)
- **Absender:** Es werden Informationsdaten über den Absender beigefügt. Sofern endgeräteseitig Absenderdaten bereits in einem Absenderspeicher abgelegt sind, kann durch Vergleich der empfangenen mit den gespeicherten Daten eine eindeutige Zuordnung der empfangenen Nachricht zu einem bestimmten Absender erfolgen. Dabei können im endgeräteseitigen Absenderspeicher den gespeicherten Absenderdaten Zusatzinformationen für den Benutzer wie Name, Adresse, Telefonnummer oder ähnliche persönliche Daten zugeordnet sein, die dem Endgerätebenutzer bei Bedarf ausgegeben werden können, z.B. durch optische Anzeige auf einem Display bei Eingang einer Nachricht. Der Absenderspeicher kann so ausgelegt sein, daß eine Verwaltung der Absenderdaten durch direkten Zugriff seitens des Endgerätebenutzers möglich ist.
- **Zusatzinformation**: Nachrichtenspezifische Daten z.B.
   - bei E-mail: Länge der Mitteilung
   - bei SMS: Länge der Mitteilung, Anzahl der SMS-Nachrichten
   - bei Fax: Anzahl der Seiten

Gehen Nachrichten auf dem Endgerät ein, so kann vorgesehen werden, daß alle oder nur eine bestimmte Auswahl dieser Zusatzdaten dem Benutzer in Zusammenhang mit der Nachricht angezeigt oder ausgegeben werden.

Alle endgeräteseitig erzeugten Daten, die Nachrichten enthalten, werden mit allen oder nur einer Auswahl der folgenden Zusatzdaten, z.B. durch Setzen entsprechender Parameter in vorgesehenen Statusfeldern, versehen:
- **aktueller Nachrichtenstatus,** z.B.
   - Warten: Nachricht wartet auf Versand
   - Aktiv: Nachricht wird gerade verschickt
   - Fehler: Beim Versand der Nachricht ist ein Fehler aufgetreten
   - Erfolg: Nachricht wurde erfolgreich verschickt
- **Datum** und **Uhrzeit**
- **Dienst**
   Fax
   E-Mail
   SMS
   Funkruf
   T-Online
   Internet WWW
   etc.
- **Empfänger:** Es werden Informationsdaten über den Empfänger beigefügt. Sofern endgeräteseitig Empfängerdaten bereits in einem Empfängerspeicher abgelegt sind, kann durch Vergleich der zu versendenden mit den gespeicherten Daten eine eindeutige Zuordnung des Empfängers erfolgen. Das Verfahren läuft dabei analog zum Verfahren für eingehende Nachrichten, d.h. es können analog auch weitere persönliche Daten zugeordnet und gegebenenfalls ausgegeben werden. Es kann für eingehende und ausgehende Nachrichten auch jeweils auf denselben endgeräteseitigen Speicher zugegriffen werden, der damit ein kombinierter Absender/Empfängerspeicher ist.
- **Zusatzinformation:** Nachrichtenspezifische Daten z.B.
   - bei E-mail: Länge der Mitteilung
   - bei SMS: Länge der Mitteilung, Anzahl der Einzelmitteilungen
   - bei Fax: Anzahl der Seiten
   - bei T-Online,: WWW, Terminal Verbindungsdauer

### Absender-und/oder Empfängerspeicher:

In diesem Speicher können unterschiedliche Arten von Einträgen vorgesehen sein, z.B.:
- Einzeleinträge, die Daten einzelner Personen enthalten
- Gruppeneinträge, die auf die Daten mehrerer Einzeleinträge verweisen. Wird ein solcher Gruppeneintrag angesprochen, so wird effektiv ein ganzes Bündel von Einzeleinträgen angesprochen
- Einträge über direkte Endgerätezugangsverbindungen (Terminalverbindungen, Modemverbindungen etc.). Hierbei können die Einträge so ausgelegt sein, daß benutzerseitig eine Verwaltung und Konfiguration der speziellen Parameter der Zugangsverbindungen ermöglicht wird. Es kann jedoch auch vorgesehen sein, daß eine automatische Konfiguration durch das Endgerät erfolgt und auch auf Änderungen der Zugangsbedingungen automatisch durch Neukonfigurationen reagiert wird.

Wie bereits erwähnt kann vorgesehen sein, daß eine Verwaltung der Speichereinträge durch direkten Zugriff seitens des Endgerätebenutzers möglich ist.

### Nachrichtenspeicher:

Es können eingehende und ausgehende Nachrichtendaten jeweils in getrennten Speichern abgelegt und verwaltet werden oder in einem gemeinsamen Speicher. Die Verwaltung wird jeweils durch die den Nachrichtendaten zugeordneten Zusatzdaten ermöglicht. Somit kann z.B. dem Benutzer eine Übersicht ausgegeben werden über alle versendeten Nachrichtendaten oder alle Nachrichtendaten, die einem bestimmten Empfänger oder Absender zugeordnet sind. Es sind für die Auswahl der Nachrichtendaten weitere Abfragen möglich, wobei bestimmte Suchkriterien vordefiniert oder benutzerseitig auswählbar sein können.

Bevorzugt erfolgt eine systemseitige Ermittlung der Versandart für jede Nachricht. Hierbei bestehen mehrere Möglichkeiten, die durch benutzerseitige Auswahl beeinflußt werden können, z.B.:
- Vordefiniert: Den Empfängerdaten im endgeräteseitigen Empfängerspeicher werden individuell Daten über eine bevorzugte Versandart zugeordnet. Das endgeräteseitige System wählt dann automatisch nach Abfrage der Versanddaten im Empfängerspeicher die gewünschte Kommunikationsart aus und stellt über die mobile Kommunikationseinheit eine entsprechende Verbindung zum Mobilkommunikationssystem her.
- Schnellste Verbindung: Das endgeräteseitige System greift auf einen entsprechenden Datenspeicher zu, in dem Daten für einen schnellen Verbindungsaufbau abgelegt sind, insbesondere Daten über den besten Kommunikationsart. Diese Daten können z.B. auch mit Tages- und Zeitdaten verbunden sein, so daß eine tages- und zeitabhängige Auswahl der schnellsten Kommunikationsart durch das System erfolgen kann.
- Kostengünstigste Verbindung: Analog zum vorhergehenden Fall greift das endgeräteseitige System auf einen entsprechenden Datenspeicher zu, in dem Daten für einen kostengünstigen Verbindungsaufbau abgelegt sind, insbesondere Daten über die kostengünstigste Kommunikationsart. Diese Daten können ebenfalls mit Tages- und Zeitdaten sowie auch mit Tarifdaten verbunden sein, so daß auch hier eine tages- und zeitabhängige Auswahl der kostengünstigsten Kommunikationsart durch das System erfolgen kann.

Es kann zusätzlich der Austausch von Steuer- und Informationsdaten vorgesehen werden, z.B. zur Übertragung'von Hinweisen auf Änderungen der Kommunikationsbedingungen im Mobilkommunikationssystem, auf die entweder das endgeräteseitige System oder der Benutzer zu reagieren hat. So kann beispielsweise das endgeräteseitige System über eine Informationsnachricht darüber in Kenntnis gesetzt werden, daß auf Seiten des Mobilkommunikaitonsnetzes Nachrichten vorliegen. Diese Information kann dann endgeräteseitig an den Benutzer weitergegeben werden, der ein Abrufen der Nachrichten veranlassen kann. Es kann aber auch ein automatischer Abruf der Nachrichten durch das Endgerät erfolgen. Die Nachrichtendaten können dann endgeräteseitig gespeichert werden und das Vorliegen der Daten dem Benutzer angezeigt werden. Dabei kann jeweils die endgeräteseitige Verknüpfung der Nachrichtendaten mit Absenderdaten sowie deren Ausgabe an den Benutzer vorgesehen sein.

Beim Versand von Nachrichtendaten kann eine längere Nachricht in mehrere Einzeldatenblöcke aufgeteilt werden. Für diese Einzeldatenblöcke wird eine Kodierung verwendet, die ein Zusammenfügen der Einzeldatenblöcke beim Empfänger ermöglicht. Dies ist insbesondere anwendbar bei Versenden von Nachrichten über Kommuniationswege mit begrenzter Übertragungsrate oder Nachrichtenlänge z.B. bei Kurznachrichten (SMS). Das Zusammenfügen kann automatisch durch das empfangende System erfolgen und es wird die so zusammengefügte Nachricht als ganzes in dem entsprechenden Nachrichtenspeicher abgespeichert.

Eine spezielle Ausgestaltung der vorliegenden Erfindung wird anhand der folgenden Beschreibung beispielhaft erläutert.

Der Austausch von Nachrichten kann nach folgendem Schema ablaufen: Man will einer Einzelperson oder einer Gruppe Informationen zukommen lassen.

Der Empfängerspeicher enthält Informationen über mögliche Empfänger:
- Adressinformationen
- Kommunikationsinformationen
- Notizen

Während Sprache, Fax und SMS bei bekannter Rufnummer direkt erreichbar sind, ist beim Datendienst in der Regel noch das Protokoll festzulegen, mit dem die Übertragung durchgeführt werden soll. Bei Anwahl einer Internet-Adresse ist inzwischen eine vergleichbare Erreichbarkeit gegeben.

### Ablauf zum Versand von Nachrichten:

- Auswahl eines Empfängereintrages aus dem Empfängerspeicher durch den Benutzer
- Eingabe einer Nachricht oder Auswahl vordefinierter Nachrichteridaten aus einem Nachrichtenspeicher z.B. Standardnachricht durch den Benutzer unter Benutzung des endgeräteseitigen Rechnersystems z.B. Laptop
- Systemseitige Verknüpfung der Empfängerdaten mit den Nachrichtendaten
- Optional: Definition eines Sendezeitpunktes für die Nachricht durch den Benutzer oder durch das System
- Systemseitige Ermittlung der Versandart für die Nachricht
- Optional: Systemseitige Ausgabe (z.B. auf Anzeigedisplay) der Nachrichten- und Empfängerdaten sowie der Versandart
- Optional: Bestätigung oder Korrektur der ermittelten Versandart durch den Benutzer
- Systemseitiger Versand der Nachricht
- Systemseitige Ausgabe der Empfängerdaten sowie bestimmter Nachrichtendaten, insbesondere des aktuellen Nachrichtenstatus, z.B. durch optische Ausgabe auf einem Display

### Mögliche Versandarten:

**Vordefiniert -** Zu jedem Empfängereintrag, der im Empfängerspeicher eingetragen ist, ist eine vordefinierte Kommunikationsart angegeben (Fax, Festnetz-Fax, E-Mail, Funkruf). Die Kommunikationsart kann vom Benutzer bestätigt oder korrigiert werden. Die alternative Auswahl mehrerer Kommunikationsarten ist möglich. Das System kann dann die Nachricht über alle alternativ ausgewählten Kommunikationsarten parallel versenden oder entsprechend systemseitiger Vorgaben oder Informationen über die Erreichbarkeit der Kommunikationsarten einen oder mehrere dieser Wege auswählen. Dies ist insbesondere relevant, wenn als Empfängereintrag ein Gruppeneintrag ausgewählt wurde. Hierbei kann das System, z.B. durch Zugriff auf die mit dem Gruppeneintrag verbundenen Einzeleinträge, individuell für jeden Einzeleintrag eine Auswahl der Kommunikationsarten vornehmen. Es kann auch eine automatische Aufteilung der Nachricht erfolgen, wenn mehrere alternative Kommunikationsarten möglich sind. So können z.B. der Titel der Nachricht, der Absender oder die ersten Zeilen über einen Kurznachrichtendienst versandt werden, der gesamte Text jedoch parallel per E-Mail oder Fax übertragen werden.

**Schnellste Verbindung** - Es wird eine Reihenfolge für die Auswahl der schnellsten Kommunikationsart festgelegt, z.B.
• SMS
• Fax
• Internet

**Kostengünstigste Verbindung -** Abhängig von der Länge der Nachricht schätzt das System ab, wie lange eine Fax- bzw. Datenübertragung der Nachricht dauert. Durch Zugriff auf gespeicherte Tarifdaten kann für den aktuellen Zeitpunkt die günstigste Übertragtungsmöglichkeit berechnet werden. Es kann vorgesehen werden, daß bei kurzen Nachrichten immer eine vordefinierte Kommunikationsart gewählt wird, z.B. SMS.

### Weitere Funktionen:

### Fax:

- Versand von Faxdokumenten über Fax-Druckertreiber
- Empfang, Eingangsverwaltung und Anzeige von Faxdokumenten
- Abruf von Faxdokumenten (Faxpolling)

### Daten:

- Dateitransfer
- Terminal
- Integrierter T-Online-Decoder (CEPT)

### Internet:

- Senden von E-Mail
- Eingabe und Versand von E-Mail
- Anzeige von HTML-Dokumenten aus dem WWW

## Patentansprüche

1. Verfahren zum Austausch von Nachrichten in einem Mobilkommunikationssystem mit Endgerätesystemen, wobei im Mobilkommunikationssystem mehrere alternative Kommunikationsarten für den Austausch von Nachrichten zur Verfügung stehen, und das Endgerätesystem unter Zugriff auf endgeräteseitig gespeicherte Daten einen Nachrichtenaustausch durchführt,
**dadurch gekennzeichnet,**
**daß** der Nachrichtenaustausch über eine oder mehrere der Kommunikationsarten durchgeführt wird, und die endgeräteseitig gespeicherten Daten zumindest Empfängerdaten sowie diesen Empfängerdaten zugeordnete Informationen über bevorzugte Kommunikationsarten enthalten.

2. Verfahren nach Anspruch 1, wobei für bestimmte Empfängerdaten durch die Informationen über Kommunikationsarten eine oder mehrere Kommunikationsarten festgelegt werden.

3. Verfahren nach Anspruch 1 oder 2, wobei als zu verwendende Kommunikationsart durch das Endgerätesystem die schnellste und/oder kostengünstigste Kommunikationsart ermittelt und ausgewählt wird.

4. Verfahren nach einem der Ansprüche 1 bis 3, wobei den Nachrichtendaten eingehender und/oder ausgehender Nachrichten automatisch nachrichtenbezogene und/oder absenderbezogene und/oder empfängerbezogene Zusatzdaten zugeordnet werden

5. Verfahren nach Anspruch 4, wobei zur Erzeugung der Zusatzdaten auf endgeräteseitig gespeicherte Absender-und/oder Empfängerdaten zugegriffen wird.

6. Verfahren nach einem der Ansprüche 1 bis 5, wobei dem Benutzer des Endgerätesystems bestimmte Nachrichtendaten sowie den Nachrichtendaten zugeordnete Zusatzdaten über eingehende und/oder ausgehende Nachrichten in geeigneter Form ausgegeben werden.

## Claims

1. Method for exchanging messages in a mobile communications system having terminal device systems, wherein in the mobile communications system a plurality of alternative modes of communication is available for the exchange of messages and the terminal device system carries out exchange of messages while accessing data stored locally on the terminal devices, **characterized in that** the exchange of messages is carried out via one or more modes of communication and the data stored locally on the terminal devices contain at least recipient data and information about preferred modes of communication associated with these recipient data.

2. Method according to claim 1, wherein for certain recipient data one or more modes of communication are laid down by the information about modes of communication.

3. Method according to claim 1 or 2, wherein for the mode of communication to be used the most rapid and/or lowest-cost mode of communication is determined and selected by the terminal device system.

4. Method according to any of claims 1 to 3, wherein additional message-related and/or sender-related and/or recipient-related data are automatically assigned to the message data of incoming and/or outgoing messages.

5. Method according to claim 4, wherein for generating the additional data, sender data and/or recipient data stored locally on the terminal device are accessed.

6. Method according to any of claims 1 to 5, wherein message data destined for the user of the terminal device system and additional data about incoming and/or outgoing messages associated with the message data are output in suitable form.

## Revendications

1. Procédé d'échange de messages dans un système de communication mobile avec des systèmes de terminaux, dans lequel plusieurs types de communication différents sont disponibles pour l'échange de messages dans le système de communication mobile et le système de terminal effectue un échange de messages en accédant à des données stockées côté terminal, **caractérisé en ce que** l'échange de messages se fait au moyen d'un ou plusieurs des types de communication et **en ce que** les données stockées côté terminal contiennent au moins des données de destinataire ainsi que des informations concernant des types de communication préférés affectées à ces données de destinataire.

2. Procédé selon la revendication 1, dans lequel un ou plusieurs types de communication sont définis pour certaines données de destinataire par les informations concernant les types de communication.

3. Procédé selon la revendication 1 ou la revendication 2, dans lequel le type de communication le plus rapide et/ou le plus économique est défini et sélectionné par le système de terminal comme type de communication à utiliser.

4. Procédé selon l'une des revendications 1 à 3, dans lequel des données supplémentaires liées aux messages et/ou liées à l'émetteur et/ou liées au destinataire sont affectées automatiquement aux données de messages entrants et/ou sortants.

5. Procédé selon la revendication 4, dans lequel, pour générer les données supplémentaires, on accède à des données d'émetteur et/ou à des données de destinataire mises en mémoire côté terminal.

6. Procédé selon l'une des revendications 1 à 5, dans lequel certaines données de messages ainsi que les données supplémentaires affectées à celles-ci et concernant les messages entrants et/ou sortants sont présentées à l'utilisateur du système de terminal sous une forme appropriée.
